# EUROPEAN PATENT SPECIFICATION

(11) **EP 3 631 952 B1**
(45) Date of publication and mention of the grant of the patent: **01.12.2021**
(21) Application number: 18724910.7
(22) Date of filing: 23.05.2018
(51) Int. Cl.: H02K 11/33

(54) **ELECTRIC MACHINE WITH INTEGRATED POWER ELECTRONICS**
ELEKTRISCHE MASCHINE MIT INTEGRIERTER LEISTUNGSELEKTRONIK
MACHINE ÉLECTRIQUE À ÉLECTRONIQUE DE PUISSANCE INTÉGRÉE

(30) Priority: 01.06.2017 EP 17174016
(43) Date of publication of application: 08.04.2020
(60) Divisional application: 21196954.8
(73) Proprietor: Mahle International GmbH, 70376 Stuttgart (DE)
(72) Inventor: GASPARIN, Lovrenc, 5000 Nova Gorica (SI); MARKIC, Stojan, 5211 Kojsko (SI); UCIN, Simon, 6230 Postojna (SI)
(74) Representative: BRP Renaud & Partner mbB Rechtsanwälte Patentanwälte Steuerberater
(86) International application number: PCT/EP2018/063554
(87) International publication number: WO 2018/219749

(56) References cited:
- EP-A1- 1 418 660
- DE-T5-112011 102 869
- US-A1- 2016 036 305

## Description

### Field of the invention

The present invention relates to an electric machine with integrated electronics to operate as an electric motor and/or generator in electrically powered systems, according to the preamble of claim 1.

### Background of the invention

In modern electric drive systems and electric power supply systems high power density motors and generators with integrated electronics are required. In the present context the expression "motor" is used representative for "machine", said machine can be or can be used as a motor or a generator or a motor-generator.

It is a challenge to integrate a three phase inverter together with an electric motor in the same housing, particularly when high power output of the assembly is required. In such systems the winding terminals in the motor part get heavily loaded with high currents, often leading to relatively big dimensions. In relation to this, also the electric current sensors mounted around heavy motor phase connections need to be rather big and need to work and measure high currents in range of possibly several hundred amperes. Connecting motor windings and their coils to power switches like MOSFET transistors, especially when these are connected in parallel, is often not solved symmetrically and consequently all motor coils and all power switches in the inverter part don't get equally loaded. Hence all of them are not used to their full capability. Thus, the problem exists as how to efficiently connect motor windings with the electronics in order to get symmetrical currents in all motor coils and in all power switches or transistors, respectively. A further technical challenge is how to lower several temperature hot spots inside the machine, i.e. the motor and/or the generator, and the electronic parts. Connections between the motor and inverter need also to be designed for heavy currents and are therefore also taking large dimensions. Otherwise these connections would heat up and become thermally critical.

In relation to functional safety, power switches in the power stage of the inverter may fail (go in short), what will in case of paralleled coils introduce that the complete motor windings go in short and cause a large unwanted braking torque of the electric motor and/or generator.

In security sensitive applications the electric machine is expected to have a high reliability. For example such an electrical machine can be a security relevant component within a plant or a building or a vehicle such that a failure of the electric machine can cause high damages. Security relevant components in a vehicle can be part of an electrical power steering, an electrical break system, a pump, a fan and also propelling motors of the vehicle.

The technical problem, with which the present invention deals, is to find such a machine or motor and/or generator, respectively, with integrated electronics which shows increased efficiency. Increased efficiency can e.g. be achieved when the machine could have preferably no winding coils and no power switches connected in parallel. Further it is desirable that the electric current sensors would not be arranged so to measure a complete motor phase currents but rather be designed so, to measure only a portion of the phase current and so become smaller in size. Still it is requested that the motor control algorithms remain within known algorithms like for instance the Field Oriented Control algorithm or FOC-algorithm. Minimizing the parallel connections of motor coils and reducing the need for paralleling the power switching elements, shall reduce the torque ripple and the operational noise of the complete motor generator. Dividing a typical three phase motor windings connection to a three phase inverter outputs with multi connections would further reduce the hot spots in the connections and their mechanical size.

There is a known solution for the electric machine with electronics, which has windings arranged in two groups and has two associated switching circuits in the power electronics. An example is proposed in the patent publication US 6 236 583 B1. The application describes two winding groups wounded in opposite direction and accordingly supplied with the voltage generated by a switching algorithm in two switching circuits which produce generated torque from magnetic field generated from both winding groups. The proposed solution requires drivers to switch the power switches in opposite manner, when observing both switching circuits. Consequently the driving electronics need to provide two times the three phase configuration to switch the two switching circuits with electrical phase shift of 180 degrees.

Other examples are proposed in US 9 059 659 B2 and CN 103 516 265 A. The proposed solutions comprise two independent windings and two three phase controllers, so when the first half of the motor windings and corresponding inverter is faulty the motor can run on the second half. Consequently these proposals need two motor control algorithms to run independently and this involves the need for two independent sets of current sensors.

Both of the above examples need a driving circuitry with twelve drivers to control the power switches of both three phase power sections.

A rotary electric machine of the generic type is know from US 2016/0 036 305 A1. Similar electric machines are known from EP 1 418 660 A1 and DE 11 2011 102 869 T5.

### Summary of the invention

According to the present invention the motor windings are divided into a plurality of galvanic isolated winding sections. Each winding section has coils so connected, that they form a multi-phase windings, preferably a three-phase windings, while all winding sections are substantially the same to each other at least with regard to the number of turns and the wire lengths in such a way, that the winding sections have the same electrical resistance. Coils in the windings are preferably not connected in parallel, instead each individual coil is connected to power switches independently. The power switches in the inverter part are so arranged, to form a plurality of half bridge legs with preferably only one power switch element in upper side and one in the lower side of the half bridge leg. The number of half bridges is by this proposal preferably equal to number of coils in the motor. Power switches are so dimensioned, that they ideally do not need to be connected in parallel, so each transistor, when switched on, will carry exactly the same current, as it flows through the single coil assigned to this switch or transistor, respectively. Motor coils are substantially identical, so their resistance is substantially the same for all of them and therefore the currents, which flow through motor coils and through each transistor, are correspondingly substantially identical and equalized, when powered with the same voltage. In this context the expression "substantially equal" allows deviations from "exactly equal" of less than 5%, preferably of less than 3%.

According to a preferred embodiment the number of said galvanic isolated winding sections can be equal to the number of pole pairs on the rotor. In this preferred embodiment the number of pole pairs of the rotor can be even or odd. According to another advantageous but less preferred embodiment, the number of pole pairs on the rotor is even and the number of said galvanic isolated winding sections can be half the number of pole pairs on the rotor.

Motor coils which belong to the same motor phase have reduced amount of demanded motor current in direct relation to the motor pole pair number. So for instance a four pole pair motor would have currents in the coils and their terminals reduced four times compared to the current which would flow in one phase of the conventional single three phase motor winding. The terminals and the connection to inverter can therefore be dimensioned for the four times smaller currents. Adequately the current sensors range can be four times smaller and therefore correspondingly smaller in size and will use less volume. The number of current sensors needed to control the motor remains the same as for the conventional solution. By this invention the phase current measurement does not involve a complete motor phase current, but requires the current measurement through only two coils from all coils of the complete stator windings.

In particular, the present invention presents a rotary electric machine with integrated power electronics comprising a motor portion and an inverter portion. Said motor portion further comprising a cylindrical stator core, a plurality of coils, circumferentially disposed around in the stator core, said stator coils so connected, that they form plurality of galvanic isolated winding sections, from which each winding section has coils connected in a multi-phase, preferably in a three-phase star configuration, a rotor with Npp number of pole pairs rotatable disposed against the stator magnetic field generated by currents in stator windings. Said inverter portion further comprising a plurality of power switching elements forming a power stage, said power switching elements so connected, that they form a number Nhb of half bridge legs further comprising a high side power switching element and a low side power switching element in each leg. A positive and a negative DC link bus connection, connecting all half bridges to a DC link capacitor bank, a plurality of half bridge output connectors, that are electrically connected to the windings, current sensors for measuring the currents in stator windings. Furthermore, the stator has a number of said galvanic isolated winding sections which is equal to Npp number of pole pairs on the rotor, wherein said winding sections are all electrically identical, their coils connected to power stage, which has a number Nhb of said half bridge legs, where Nhb is equal to number of isolated winding sections Npp multiplied by the number of phases, preferably three, the output connector of each half bridge leg connected to individual coil terminal, and having said current sensors so arranged, to measure the currents in only one from the said number of isolated winding sections.

Preferably, the machine can have a number of said half bridge legs equal to the number of coils in the motor stator.

Preferably, the machine can have Field Oriented Control algorithm for controlling the electric machine operation based on current measurements in one from the plurality of said galvanically isolated winding sections.

Preferably, the machine can have all half bridge legs embodied substantially identical and arranged in circumferential direction.

Preferably, the machine utilizes the half bridge legs which are connected to different winding sections with the same driver elements which utilize the first winding section.

According to the invention, the machine has current sensors so arranged to measure the current through only two coils from said plurality of coils in the stator windings.

In particular, the inverter portion is provided with current sensors for measuring the currents in winding sections assigned to the individual coils. According to the invention, the number of current sensors is smaller than the number of sub-sections of the isolated winding sections in order to reduce the manufacturing costs, wherein said sub-sections of the respective winding section are assigned to different coils and phases of the multi-phase configuration.

According to the invention, the number of coil pairs on the rotor is greater than two, and said current sensors are arranged to measure the currents in only two of the isolated winding sections. Such an embodiment has an increased redundancy.

Preferably, said current sensors can be arranged to measure the currents in the respective isolated winding section in only two coils of said isolated winding section, wherein said two coils are assigned to different phases of the multi-phase configuration. In such a case two current sensors are assigned to the same winding section in two coils. This configuration additionally enables a detection failure of the current sensors and failure of the winding sections.

According to the invention, at least four current sensors are provided, wherein said four current sensors are arranged to measure a) the currents in a first isolated winding section in two coils of this first isolated winding section, wherein said two coils are assigned to a first and second phase of the multi-phase configuration, and b) the currents in a second isolated winding section in two coils of this second isolated winding section, wherein said two coils are assigned to the first and second phase of the multi-phase configuration.

In an embodiment, which is not according to the invention, the number of coil pairs on the rotor is exactly four, and said current sensors can be arranged to measure the currents in all four winding sections. In this case also a failure of both current sensors of the same winding section can be detected.

Preferably, in this embodiment, which is not according to the invention, said current sensors can be arranged to measure the currents in the respective isolated winding section in only six coils of said isolated winding section. This configuration increases the redundancy.

More preferably, in this embodiment, which is not according to the invention, at least six current sensors can be provided, wherein said current sensors can be arranged to measure a) the currents in a first isolated winding section in two coils of this first isolated winding section, wherein said two coils are assigned to a first and second phase of the multi-phase configuration, b) the currents in a second isolated winding section in two coils of this first isolated winding section, wherein said two coils are assigned to the first and second phase of the multi-phase configuration, c) the currents in a third isolated winding section in a coil assigned to the first phase of the multi-phase configuration, and d) the currents in a fourth isolated winding section in a coil assigned to the first phase of the multi-phase configuration. With this configuration a very high redundancy can be achieved with a relatively small number of sensors. An electric machine with four pole pairs and three phases has preferably twelve winding sections. A conventional detection of all twelve sub-sections of the windings uses twelve current sensors. The presented configuration uses only six current sensors. In particular, this configuration comprises a first current sensor assigned to a first sub-section of the first winding section in the coil of the first phase, a second current sensor assigned to a first sub-section of a second winding section and the coil of the first phase, a third current sensor assigned a second sub-section of the first winding section in the coil assigned to a second phase, a fourth current sensor assigned to a second sub-section of the second winding section in the coil assigned to the second phase, a fifth current sensor assigned to a first sub-section of a third winding section in the coil assigned to the first phase, and a sixth current sensor assigned to a first sub-section of a fourth winding section in the coil of the first phase.

Preferably, said current sensors can be directly connected to the respective isolated winding section or sub-section in the area of the respective terminal. In particular, the respective current sensor is connected between the respective terminal and the switching elements assigned to said isolated winding section or sub-section, respectively. Therefore, the currents in the respective winding section can be detected independently from the operation mode of the machine and independent from the actual state of the switching elements.

### Brief description of the drawings

**FIG. 1** is a block diagram of an electric machine with integrated electronics with the connections of motor parts with the inverter parts.
**FIG. 2** is a circuit diagram of the driver circuitry for driving the power switches, which belong to the same motor phase; example shown is for the phase U.
**FIG. 3** is a block diagram of the motor part of FIG. 1 but in another embodiment.

### Detailed description of invention

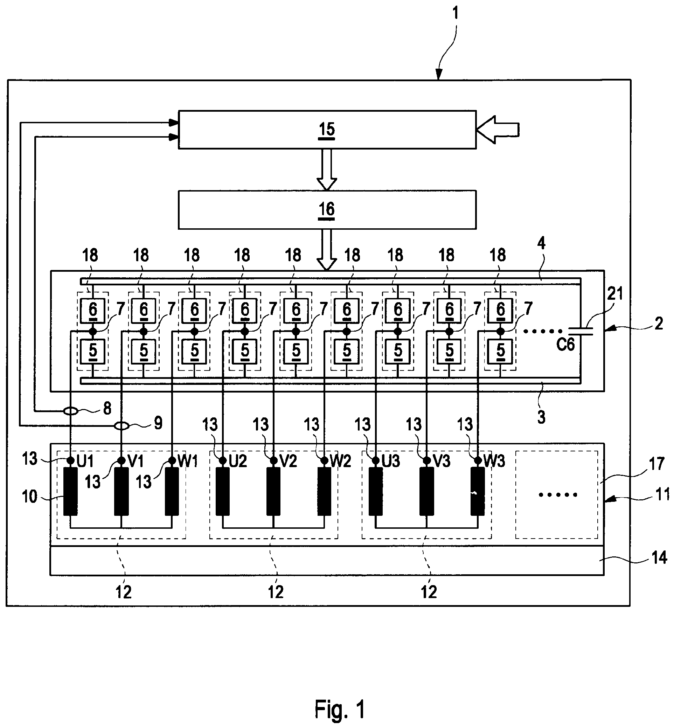

According to FIG. 1 an electric machine 1, which can be also addressed as "motor", with integrated power electronics comprises a motor portion 11 and an inverter portion 2. The motor portion 11 comprises a stator 17, which is further comprising a plurality of galvanic isolated winding sections 12. The number of isolated winding sections 12 is so selected that it is equal to a number of pole pairs Npp on the rotor 14. The number of pole pairs Npp can be four for example. Each isolated winding section 12 has coils 10 preferably connected in star connection and forming a three phase winding section 12 essentially similar to another isolated winding section 12. The rotor 14 has said number of pole pairs Npp, which are rotatable disposed against the stator magnetic field generated by currents in the stator windings 12. Power switches 5 an 6 in the inverter part 2 are so arranged to form a plurality, i.e. a number Nhb of half bridge legs 18 with preferably only one power switch element 6 on the upper side and one power switch element 5 on the lower side of the half bridge leg 18 (FIG. 1). Output contacts 7 of the half bridge leg 18 are individually connected with coil ends 13 of the winding sections 12. All high side switches 6 are connected with their positive terminal to a DC link buss bar 4 which is essentially connected with a main power terminal B+ of the complete unit. Accordingly, all low side switches 5 are connected with their negative terminal to a negative DC link buss bar 3, which is further connected with the main power terminal B- of the complete unit. Accordingly, all half bridge legs 18 are connected via the positive and negative link bus bars 3 and 4 to a DC link capacitor bank 21 consisting of at least one capacitor Cb Preferably, the DC link capacitor bank 21 consists of several capacitors Cb connected in parallel. The power switches 5 and 6 are excited from the driver circuitry 16 which provides a PWM (Pulse Width Modulation) signal so, that the coils 10 which belong to the same phase of the motor 1 are having essentially the same voltage within all isolated winding sections 12 at any time.

For the example shown in FIG.1 this means, that the voltage signal applied to winding terminal U1 in the first winding section 12 is significantly the same as the voltage applied to winding terminal U2 in the second winding section 12 and so on the same through all the winding sections 12 in the motor-generator.

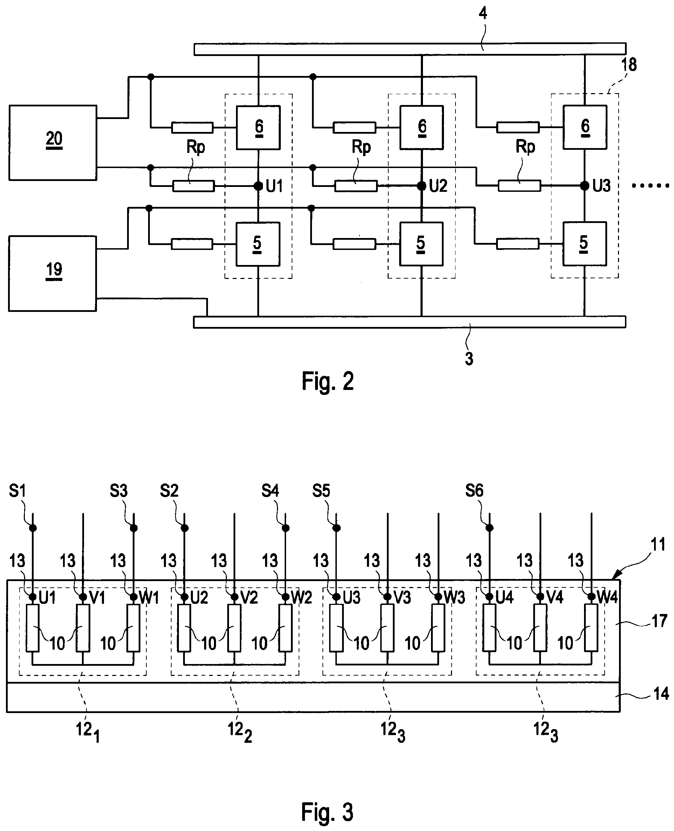

According to Fig. 2 a driver circuitry 16 comprises drivers 20 for high side power switches 6 and drivers 19 for the low side power switches 5 so that one high side driver output is connected to half bridge legs which belong to the same phase in the motor 1 through the resistors Rp. By this connection the number of drivers 19, 20 necessary to excite all the power switches 5, 6 is minimized to one for the high side and one for the low side exciting all coils 10 which belong to the same phase U, V, W in the motor 1 and this in all winding sections 12 in the motor 1. Consequently for the three phase motor inverter assembly the necessary numbers of drivers 19, 20 remain only three for the high side and three for the low side.

According to Fig. 1 current sensors 8 and 9 are so arranged that they measure the currents in only one from the plurality of winding sections 12 in the motor 1. Further it is suggested to measure the current with sensor 8 in only one coil 10 and with sensor 9 the current in a second coil 10 from the plurality of coils 10 in the motor stator 17. Their output values are processed in a control board 15 and the resulted PWM signal is output to the input of the driver circuitry 16. By this proposal the currents through current sensors 8, 9 are Npp times lower than the currents that would flow in the conventional motor configuration with just one winding in the stator. Consequently the size and the measuring range for the current sensors 8, 9 like in this proposal are reduced by Npp times. In a motor control algorithms, e.g. in an FOC (Field Oriented Control) algorithm, the measured values from the current sensors 8, 9 need to be multiplied with Npp in order to scale the motor current with the motor constant and so to control properly the requested motor torque output.

The invention can be summarized as follows. An electric machine 1 is provided which has integrated electronics and operates as an electric motor-generator in electrically powered systems. Said machine 1 has a motor portion 11 with a plurality of coils 10 so connected, to form a number of isolated winding sections 12 with multi-phase configuration, which are substantially identical between each other. Said motor portion 11 also has a rotor 14 with a number of pole pairs equal to said number of isolated winding sections 12. An inverter portion 2 of the machine 1 has a plurality of power switching elements 5, 6 forming a power stage with a number of half bridge legs 18. Output connectors 7 of said half bridge legs 18 are electrically connected to terminals 13 of individual coils 10. A control board in an ECU (Electronic Control Unit) of the inverter portion 2 provides such a control algorithm and signals for power switching, that the coils 10, which belong to the same phase of the machine 1, have the same terminal voltages. Current sensors 8, 9 for measuring the motor phase currents are so arranged to measure the currents through only two coils 10 from the plurality of coils 10 in the stator 17. The size, the measuring range of current sensors 8, 9 and unwanted braking torque during faults in motor windings or in power switches are reduced by the number of isolated winding sections 12. Therefore the motor-generator 1 becomes more compact and has a higher functional safety.

Fig. 3 depicts the motor portion 11 with the stator 17 and the rotor 14. In this preferred embodiment the number of pole pairs is greater than two and also greater than three. In the depicted example exactly four pole pairs are provided. To each pole pair a galvanic insulated winding section 12 is assigned, namely a first winding section 12₁, a second winding section 12₂, a third winding section 12₃ and a fourth winding section 12₄. The machine 1, respectively the motor portion 11 has a three phase configuration. The three phases are named U, V, and W, or first, second and third phase, respectively. By way of simplification, the phases can be named first phase U, second phase V and third phase W. It is understood that this correlation between the phases U, V, and W, on the one hand, and first, second and third phase, on the other hand, can be different. Each coil 10 comprises a winding for each phase, which are galvanic isolated. Said windings of the coils 10 are formed by sub-sections of the winding section 12. Therefore, twelve sub-sections are defined as follows, namely sub-portions U1, V1, W1 for the three phases in the first winding section 12₁, U2, V2, W2 for the three phases in the second winding section 12₂, U3, V3, W3 for the three phases in the third winding section 12₃, and U4, V4, W4 for the three phases in the fourth winding section 12₄.

In Fig. 3 the current sensors 8, 9 depicted in Fig. 1 have the reference sign S.

In a first embodiment exactly four current sensors S are provided, namely a first current sensor S1, a second current sensor S2, a third current sensor S3, and a fourth current sensor S4. Said current sensors S1, S2, S3, S4 are arranged to measure the currents in only two of the isolated winding sections 12, namely in the first winding section 12₁, and a second winding section 12₂. The first current sensor S1 is assigned to the first sub-section U1 of the first winding section 12₁. The second current sensor S2 is assigned to the first sub-section U2 of the second winding section 12₂. The third current sensor S3 is assigned to the second or third sub-section V1 or W1 of the first winding section 12₁. The fourth current sensor S4 is assigned to the second or third sub-section V2 or W2 of the second winding section 12₂. It is important that the first and second current sensors S1, S2 are assigned to sub-sections of the same phase, here the first phase U, and that the third and fourth current sensors S3, S4 are assigned to another phase, either both to the second phase V or both to the third phase W, here the third phase W.

These four current sensors S1, S2, S3, S4 therefore are arranged to measure the currents in the first isolated winding section 12₁ in two coils 10 being assigned to the first phase U and to the second or third phase V, W, and the currents in the second isolated winding section 12₂ in two coils 10 being assigned to the first phase U and to the second or third phase V, W. In this configuration one of the three phases in not detected, here the second phase V.

In another embodiment, which is depicted in Fig. 3, exactly six current sensors are provided, namely the aforementioned four current sensors S1, S2, S3, S4, and also a fifth current sensor S5 and a sixth current sensor S6. The fifth current sensor S5 is assigned to the first sub-section U3 of the third winding section 12₃ and is thus assigned to the first phase U. The sixth current sensor S6 is assigned to the first sub-section U4 of the fourth winding section 12₄ and is thus also assigned to the first phase U.

These six current sensors S1, S2, S3, S4, S5, S6 are arranged to measure the currents in the first isolated winding section 12₁ in two coils 10 assigned to the first and second phase U, V, the currents in the second isolated winding section 12₂ in two coils 10 being assigned also to the first and second phase U, V, the currents in the third isolated winding section 12₃ in a coil 10 assigned to the first phase U, and the currents in the fourth isolated winding section 12₄ in a coil 10 assigned also to the first phase U. Also in this configuration one of the three phases, here the second phase V is not detected.

As can be seen in Fig. 1 and 3 said current sensors 8, 9 or S1, S2, S3, S4, S5, S6, respectively, are directly connected to the respective isolated winding section 12 or sub-section U1, U2, U3, U4, V1, V2, V3, V4, W1, W2, W3, W4, respectively, in the area of the respective terminal 13. In other words, the respective connection is arranged between the respective sub-section and the respective power switching elements 5, 6.

## Claims

1. A rotary electric machine (1) with integrated power electronics comprising:
a motor portion (11) comprising:
- a stator (17),
- a plurality of coils (10), circumferentially disposed around the cylindrical stator core (17), said coils (10) being so connected, that they form plurality of galvanic isolated winding sections (12), wherein each winding section (12) has coils (10), which are connected in a multi-phase configuration and each of which is provided with a coil terminal (13),
- a rotor (14) with a number of pole pairs (Npp) rotatable disposed against the stator magnetic field generated by currents in the coils (10),
an inverter portion (2) comprising:
- a plurality of power switching elements (5, 6),
wherein
- said power switching elements (5, 6) are so connected, that they form a number (Nhb) of half bridge legs (18), and are further comprising a high side power switching element (6), a low side power switching element (5) in each half bridge leg (18), and an output connector (7) at each half bridge leg (18),
- wherein said number (Nhb) of half bridge legs (18) is equal to a number of isolated winding sections (12) multiplied by the number of phases of the multi-phase configuration, and
- wherein the output connector (7) of each half bridge leg (18) is connected to an individual coil terminal (13),
**characterized in**
- **that** the inverter portion (2) is provided with current sensors (8, 9; S) for measuring the currents in said winding sections (12),
- **that** the number (Npp) of pole pairs (P) on the rotor (14) is greater than two and that said current sensors (S) are arranged to measure the currents in only two of the isolated winding sections (12), and
- **that** at least four current sensors (S) are provided, wherein said four current sensors (S) are arranged to measure
- - the currents in a first isolated winding section (12₁) in two coils (10) of this first isolated winding section (12₁), said two coils (10) being assigned to a first and second phase of the multi-phase configuration,
- - the currents in a second isolated winding section (12₂) in two coils (10) of this second isolated winding section (12₂), said two coils (10) being assigned to the first and second phase of the multi-phase configuration.

2. The machine according to claim 1, **characterized in, that** said current sensors (S) are arranged to measure the currents in each of the two isolated winding sections (12) only in two coils (10) of the respective isolated winding section (12).

3. The machine according to claim 1 or 2, **characterized in, that** said current sensors (8, 9; S) are directly connected to the respective isolated winding section (12) in the area of the respective terminal (13).

4. The machine according to any one of claims 1 to 3, **characterized in, that** the number of said galvanic isolated winding sections (12) is equal to the number (Npp) of pole pairs on the rotor (14).

5. The machine according to any one of claims 1 to 4, **characterized in, that** in case the number (Npp) of pole pairs on the rotor (14) is even the number of said galvanic isolated winding sections (12) is half the number (Npp) of pole pairs on the rotor (14).

6. The machine according to any one of claims 1 to 5, **characterized in, that** said winding sections (12) are all electrically identical.

7. The machine according to any one of claims 1 to 6, **characterized in, that** the inverter portion (2) is provided with a positive DC link bus connection (4) and a negative DC link bus connection (3), connecting all half bridge legs (18) to a DC link capacitor bank (21).

8. The machine according to any one of claims 1 to 7, **characterized in, that** the number (Nhb) of said half bridge legs (18) is equal to the number of coils (10) in the stator (17).

9. The machine according to any one of claims 1 to 8, **characterized in, that** a Field Oriented Control algorithm is provided for controlling the electric machine operation based on current measurements in one from the plurality of said galvanically isolated winding sections (12).

10. The machine according to any one of claims 1 to 9, **characterized in, that** all half bridge legs (18) are embodied substantially identical and arranged uniformly in circumferential direction.

11. The machine according to any one of claims 1 to 10, **characterized in, that** all half bridge legs (18), which are connected to the coils (10) of the same phase in different winding sections (12), are connected with the same driver elements (19, 20) for simultaneously switching the half bridge legs (18).

## Patentansprüche

1. Elektrische Drehmaschine (1) mit integrierter Leistungselektronik, die Folgendes umfasst:
einen Motorabschnitt (11), der Folgendes umfasst:
- einen Stator (17),
- eine Vielzahl von Spulen (10), die umlaufend um den zylinderförmigen Statorkern (17) angeordnet sind, wobei die Spulen (10) derart verbunden sind, dass sie eine Vielzahl von galvanisch isolierten Wicklungsbereichen (12) bilden, wobei jeder Wicklungsbereich (12) Spulen (10) aufweist, die in einer Mehrphasenkonfiguration verbunden sind und jeweils mit einem Spulenanschluss (13) bereitgestellt sind,
- einen Rotor (14) mit einer Anzahl von Polpaaren (Npp), die drehbar zu dem Statormagnetfeld angeordnet sind, das von Strömen in den Spulen (10) erzeugt wird, einen Inverterabschnitt (2), der Folgendes umfasst:
- eine Vielzahl von Leistungsschaltelementen (5, 6),
wobei
- die Leistungsschaltelemente (5, 6) derart verbunden sind, dass sie eine Anzahl (Nhb) von Halbbrückenschenkeln (18) bilden und die weiter ein Hochseitenleistungsschaltelement (6), ein Niederseitenleistungsschaltelement (5) in jedem Halbbrückenschenkel (18) und einen Ausgangsverbinder (7) bei jedem Halbbrückenschenkel (18) umfassen,
- wobei die Anzahl (Nhb) von Halbbrückenschenkeln (18) gleich einer Anzahl isolierter Wicklungsbereiche (12) mal der Anzahl von Phasen der Mehrphasenkonfiguration ist, und
- wobei der Ausgangsverbinder (7) jedes Halbbrückenschenkels (18) mit einem individuellen Spulenanschluss (13) verbunden ist,
**gekennzeichnet dadurch,**
- **dass** der Inverterabschnitt (2) mit Stromsensoren (8, 9; S) zum Messen der Ströme in den Wicklungsbereichen (12) bereitgestellt ist,
- **dass** die Anzahl (Npp) von Polpaaren (P) auf dem Rotor (14) größer als zwei ist und dass die Stromsensoren (S) eingerichtet sind, die Ströme in nur zwei der isolierten Wicklungsbereiche (12) zu messen, und
- die mindestens vier Stromsensoren (S) bereitgestellt sind, wobei die vier Stromsensoren (S) eingerichtet sind, Folgendes zu messen
- die Ströme in einem ersten isolierten Wicklungsbereich (121) in zwei Spulen (10) dieses ersten isolierten Wicklungsbereichs (121) der zwei Spulen (10), die einer ersten und zweiten Phase der Mehrphasenkonfiguration zugewiesen sind,
- die Ströme in einem zweiten isolierten Wicklungsbereich (122) in zwei Spulen (10) dieses zweiten isolierten Wicklungsbereichs (122), wobei die zwei Spulen (10) der ersten und zweiten Phase der Mehrphasenkonfiguration zugewiesen sind.

2. Maschine nach Anspruch 1, **dadurch gekennzeichnet, dass** die Stromsensoren (S) eingerichtet sind, die Ströme in jedem der zwei isolierten Wicklungsbereiche (12) nur in zwei Spulen (10) des jeweiligen isolierten Wicklungsbereichs (12) zu messen.

3. Maschine nach Anspruch 1 oder 2, **dadurch gekennzeichnet, dass** die Stromsensoren (8, 9; S) in dem Areal des jeweiligen Anschlusses (13) direkt mit dem jeweiligen isolierten Wicklungsbereich (12) verbunden sind.

4. Maschine nach einem der Ansprüche 1 bis 3, **dadurch gekennzeichnet, dass** die Anzahl der galvanischen isolierten Wicklungsbereiche (12) gleich der Anzahl (Npp) von Polpaaren auf dem Rotor (14) ist.

5. Maschine nach einem der Ansprüche 1 bis 4, **dadurch gekennzeichnet, dass**, falls die Anzahl (Npp) von Polpaaren auf dem Rotor (14) gerade ist, die Anzahl der galvanischen isolierten Wicklungsbereiche (12) die Hälfte der Anzahl (Npp) von Polpaaren auf dem Rotor (14) ist.

6. Maschine nach einem der Ansprüche 1 bis 5, **dadurch gekennzeichnet, dass** die Wicklungsbereiche (12) alle elektrisch identisch sind.

7. Maschine nach einem der Ansprüche 1 bis 6, **dadurch gekennzeichnet, dass** der Inverterabschnitt (2) mit einer positiven GS-Anschlussschienenverbindung (4) und einer negativen GS-Anschlussschienenverbindung (3) bereitgestellt ist, die alle Halbbrückenschenkel (18) mit einer GS-Anschlusskondensatorbank (21) verbinden.

8. Maschine nach einem der Ansprüche 1 bis 7, **dadurch gekennzeichnet, dass** die Anzahl (Nhb) der Halbbrückenschenkel (18) gleich der Anzahl von Spulen (10) in dem Stator (17) ist.

9. Maschine nach einem der Ansprüche 1 bis 8, **dadurch gekennzeichnet, dass** ein feldausgerichteter Steueralgorithmus zum Steuern des elektrischen Maschinenbetriebs auf Basis von Strommessungen in einem der Vielzahl der galvanisch isolierten Wicklungsbereiche (12) bereitgestellt ist.

10. Maschine nach einem der Ansprüche 1 bis 9, **dadurch gekennzeichnet, dass** alle Halbbrückenschenkel (18) im Wesentlichen identisch ausgestaltet sind und regelmäßig in einer Umfangsrichtung eingerichtet sind.

11. Maschine nach einem der Ansprüche 1 bis 10, **dadurch gekennzeichnet, dass** alle Halbbrückenschenkel (18), die mit den Spulen (10) derselben Phase in unterschiedlichen Wicklungsbereichen (12) verbunden sind, mit denselben Treiberelementen (19, 20) zum gleichzeitigen Schalten der Halbbrückenschenkel (18) verbunden sind.

## Revendications

1. Machine électrique rotative (1) à électronique de puissance intégrée comprenant :
une partie moteur (11) comprenant :
- un stator (17),
- une pluralité de bobines (10), disposées circonférentiellement autour du noyau de stator cylindrique (17), lesdites bobines (10) étant connectées de sorte qu'elles forment une pluralité de sections d'enroulement isolées galvaniques (12), dans laquelle chaque section d'enroulement (12) présente des bobines (10), qui sont connectées dans une configuration polyphasée et dont chacune est pourvue d'une borne de bobine (13),
- un rotor (14) avec un nombre de paires de pôles (Npp) disposées de manière à pouvoir tourner à l'encontre du champ magnétique de stator généré par des courants dans les bobines (10),
une partie onduleur (2) comprenant :
- une pluralité d'éléments de commutation de puissance (5, 6),
dans laquelle
- lesdits éléments de commutation de puissance (5, 6) sont connectés, de sorte qu'ils forment un nombre (Nhb) de branches en demi-pont (18), et comprennent en outre un élément de commutation de puissance côté haut (6), un élément de commutation de puissance côté bas (5) dans chaque branche en demi-pont (18), et un connecteur de sortie (7) au niveau de chaque branche en demi-pont (18),
- dans laquelle ledit nombre (Nhb) de branches en demi-pont (18) est égal à un nombre de sections d'enroulement isolées (12) multiplié par le nombre de phases de la configuration polyphasée, et
- dans laquelle le connecteur de sortie (7) de chaque branche en demi-pont (18) est connectée à une borne de bobine individuelle (13),
**caractérisée**
- **en ce que** la partie onduleur (2) est pourvue de capteurs de courant (8, 9 ; S) pour mesurer les courants dans lesdites sections d'enroulement (12),
- **en ce que** le nombre (Npp) de paires de pôles (P) sur le rotor (14) est supérieur à deux et en ce que lesdits capteurs de courant (S) sont agencés pour mesurer les courants dans uniquement deux des sections d'enroulement isolées (12), et
- **en ce qu'**au moins quatre capteurs de courant (S) sont prévus, dans laquelle lesdits quatre capteurs de courant (S) sont agencés pour mesurer
-- les courants dans une première section d'enroulement isolée (12₁) dans deux bobines (10) de cette première section d'enroulement isolée (12₁), lesdites deux bobines (10) étant affectées à des première et seconde phases de la configuration polyphasée,
-- les courants dans une seconde section d'enroulement isolée (12₂) dans deux bobines (10) de cette seconde section d'enroulement isolée (12₂), lesdites deux bobines (10) étant affectées aux première et seconde phases de la configuration polyphasée.

2. Machine selon la revendication 1, **caractérisée en ce que** lesdits capteurs de courant (S) sont agencés pour mesurer les courants dans chacune des deux sections d'enroulement isolées (12) uniquement dans deux bobines (10) de la section d'enroulement isolée respective (12).

3. Machine selon la revendication 1 ou 2, **caractérisée en ce que** lesdits capteurs de courant (8, 9 ; S) sont directement connectés à la section d'enroulement isolée respective (12) dans la zone de la borne respective (13).

4. Machine selon l'une quelconque des revendications 1 à 3, **caractérisée en ce que** le nombre desdites sections isolées galvaniques (12) est égal au nombre (Npp) de paires de pôles sur le rotor (14).

5. Machine selon l'une quelconque des revendications 1 à 4, **caractérisée en ce que** si le nombre (Npp) de paires de pôles sur le rotor (14) est pair, le nombre de sections d'enroulement isolées galvaniques (12) est la moitié du nombre de paires de pôles sur le rotor (14).

6. Machine selon l'une quelconque des revendications 1 à 5, **caractérisée en ce que** lesdites sections d'enroulement (12) sont toutes électriquement identiques.

7. Machine selon l'une quelconque des revendications 1 à 6, **caractérisée en ce que** la partie onduleur (2) est pourvue d'une connexion de bus de liaison CC positive (4) et d'une connexion de bus de liaison CC négative (3), connectant toutes les branches en demi-pont (18) à un banc de condensateurs de liaison CC (21).

8. Machine selon l'une quelconque des revendications 1 à 7, **caractérisée en ce que** le nombre (Nhb) desdites branches en demi-pont (18) est égal au nombre de bobines (10) dans le stator (17).

9. Machine selon l'une quelconque des revendications 1 à 8, **caractérisée en ce qu'**un algorithme de commande orienté champ est prévu pour commander le fonctionnement d'une machine électrique sur la base de mesures de courant dans l'une de la pluralité desdites sections d'enroulement isolées galvaniquement (12).

10. Machine selon l'une quelconque des revendications 1 à 9, **caractérisée en ce que** toutes les branches en demi-pont (18) sont conçues sensiblement identiques et agencées uniformément dans une direction circonférentielle.

11. Machine selon l'une quelconque des revendications 1 à 10, **caractérisée en ce que** toutes les branches en demi-pont (18), qui sont connectées aux bobines (10) de la même phase dans différentes sections d'enroulement (12), sont connectées avec les mêmes éléments d'entraînement (19, 20) pour commuter simultanément les branches en demi-pont (18).
